(19) Europäisches Patentamt / European Patent Office / Office européen des brevets

(11) **EP 3 905 795 B1**

(12) **EUROPEAN PATENT SPECIFICATION**

(45) Date of publication and mention
of the grant of the patent:
**22.05.2024 Bulletin 2024/21**

(21) Application number: **20738783.8**

(22) Date of filing: **10.01.2020**

(51) International Patent Classification (IPC):
**H04W 52/02** *(2009.01)*   **H04W 72/20** *(2023.01)*
**H04W 72/23** *(2023.01)*

(52) Cooperative Patent Classification (CPC):
**H04W 52/0216; H04W 72/20;** H04W 72/23;
Y02D 30/70

(86) International application number:
**PCT/CN2020/071534**

(87) International publication number:
**WO 2020/143806 (16.07.2020 Gazette 2020/29)**

(54) **PDCCH MONITORING CONFIGURATION FOR A TERMINAL**

PDCCH-ÜBERWACHUNGSKONFIGURATION FÜR EIN ENDGERÄT

CONFIGURATION DE LA SURVEILLANCE DU PDCCH POUR UN TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.01.2019 CN 201910028851**

(43) Date of publication of application:
**03.11.2021 Bulletin 2021/44**

(73) Proprietor: **Huawei Technologies Co., Ltd.
Longgang District,
Shenzhen, Guangdong 518129 (CN)**

(72) Inventors:
• **CHEN, Zheng
Shenzhen, Guangdong 518129 (CN)**
• **XUE, Lixia
Shenzhen, Guangdong 518129 (CN)**

(74) Representative: **Gill Jennings & Every LLP
The Broadgate Tower
20 Primrose Street
London EC2A 2ES (GB)**

(56) References cited:
WO-A1-2018/128446    CN-A- 103 002 477
CN-A- 108 632 960    CN-A- 108 632 960
US-A1- 2013 039 188    US-A1- 2018 270 756

• **OPPO: "UE Adaptation to the Traffic and UE
Power Consumption", 3GPP DRAFT;
R1-1812824, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE , vol. RAN
WG1, no. Spokane, USA; 20181112 - 20181116 11
November 2018 (2018-11-11), XP051554784,
Retrieved from the Internet:
URL:http://www.3gpp.org/ftp/Meetings%5F3GP
P%5FSYNC/RAN1/Docs/R1%2D1812824%2Ezip
[retrieved on 2018-11-11]**
• **HUAWEI et al.: "Signaling based mechanisms for
UE power saving", 3GPP TSG RAN WG1 Meeting
#94bis R1-1810155, 12 October 2018 (2018-10-12),
XP051517570, DOI: 20200327161311A**

**Description**

**TECHNICAL FIELD**

The present disclosure relates to the field of communications technologies, and in particular, to PDCCH monitoring configuration for a terminal.

**BACKGROUND**

A network device in new radio (new radio, NR) configures a discontinuous reception (discontinuous reception, DRX) processing procedure for a terminal device, so that the terminal device enters a "sleep (sleep)" state periodically, stops monitoring a physical downlink control channel (physical downlink control channel, PDCCH) and stops receiving corresponding data transmission, to reduce power consumption and save power.

In DRX, when any timer in a DRX on duration timer (DRX-onDurationTimer), a DRX inactivity timer (DRX-InactivityTimer), a DRX downlink retransmission timer (DRX-RetransmissionTimerDL), or a DRX uplink retransmission timer (DRX-RetransmissionTimerUL) runs, the terminal device is in an active time (Active time). If the terminal device is in the active time, the terminal device continuously monitors a PDCCH. Generally, data transmission is bursty and sparse in time. When the terminal device is in the active time, the network device may not schedule any data for the terminal device, but the terminal device still continuously monitors the PDCCH. This generates unnecessary energy consumption.

Therefore, to reduce power consumption, a go to sleep signal (go to sleep, GTS) may be introduced. The GTS may indicate the terminal device to enter "sleep duration (Sleep duration)" or stop monitoring a PDCCH for a period of time T when no data is scheduled. If the network device determines that no data needs to be scheduled for the terminal device and no PDCCH needs to be sent to the terminal device in the continuous period of time T, the network device may send a corresponding GTS to the terminal device. If the terminal device detects a GTS or a detected GTS indicates that the terminal device has no data scheduled in the corresponding period of time T, the terminal device may enter a sleep state in the continuous period of time T, and "wake up" to monitor a GTS or a PDCCH after the continuous period of time T. If the terminal device detects no GTS signal or a detected GTS signal indicates that the terminal device has data scheduled in the continuous period of time T, the terminal device may continue to monitor a PDCCH. In this manner, unnecessary energy consumption of the terminal device can be reduced.

However, the terminal device may need to monitor a plurality of search space sets in the continuous period of time T. Provided that the network device sends a PDCCH to the terminal device in a slot in which any search space set in the sleep duration exists, the network device does not send a GTS signal to the terminal device. In this case, the terminal device needs to monitor a physical downlink control channel in all search space sets in the continuous period of time T. This is not conducive to power consumption reduction of the terminal device.

CN 108632960A relates to a kind of transmission method and device of physical downlink control channel.

**SUMMARY**

Implementations of this application provide communication methods, apparatuses and a computer-readable storage medium, to resolve a problem that unnecessary energy consumption is generated when a terminal device monitors a PDCCH.

The invention has been defined in the independent claims. Further specific technical features have been defined in the dependent claims.

According to a first aspect, this application provides a communication method. The method may be applied to a network device, a chip in a network device, a chip set in a network device, or the like. The method includes: sending a first signal to a terminal device, where the first signal corresponds to at least one search space set, or the first signal corresponds to at least one type of physical downlink control channel; and determining not to send a physical downlink control channel in the at least one search space set in a first time period, or determining not to send the at least one type of physical downlink control channel in a first time period.

In this implementation of this application, the network device may indicate, by using the first signal, search space sets in which the terminal device does not monitor a PDCCH in sleep duration, or indicate, by using the first signal, types of PDCCHs that the terminal device does not monitor in sleep duration. Therefore, after receiving the first signal, the terminal device may not monitor a PDCCH in the search space set corresponding to the first signal in the sleep duration, but monitors a PDCCH only in another search space set, or may not monitor a PDCCH of the type corresponding to the first signal in the sleep duration, but monitors only PDCCHs of other types. Compared with a manner in the conventional technology where when a network device needs to send a physical downlink control channel to a terminal device in a slot in which any search space set in the sleep duration exists, the terminal device needs to monitor the PDCCH in all search space sets in the sleep duration, in the communication method provided in this implementation of this application, when the network device needs to send a PDCCH to the terminal device in a slot in which a search space set in the sleep duration exists, the network device may indicate, by using the first signal, that the terminal device may not detect, in the sleep duration, the PDCCH in the search space set corresponding to the first signal. Therefore, energy consumption of the terminal device can be effectively reduced.

In a possible design, when the first signal corresponds to at least one search space set, the first signal may be associated with an index of the at least one search space set. Compared with a manner in the conventional technology where when a network device needs to send a physical downlink control channel to a terminal device in a slot in which any search space set in the sleep duration exists, the terminal device needs to monitor the PDCCH in all search space sets in the sleep duration, in the foregoing design, by associating the first signal with the index of the search space set, the network device may indicate, by using the first signal, that the terminal device may not monitor a PDCCH in the first time period in the search space set associated with the first signal. Therefore, energy consumption of the terminal device can be effectively reduced.

In a possible design, when the first signal corresponds to at least one search space set, the first signal may alternatively be associated with a control resource set CORESET in which the at least one search space set exists. Compared with a manner in the conventional technology where when a network device needs to send a physical downlink control channel to a terminal device in a slot in which any search space set in the sleep duration exists, the terminal device needs to monitor the PDCCH in all search space sets in the sleep duration, in the foregoing design, by associating the first signal with the CORESET, the network device may indicate, by using the first signal, that the terminal device may not monitor a PDCCH in the first time period in a search space set of the CORESET associated with the first signal. Therefore, energy consumption of the terminal device can be effectively reduced.

In a possible design, when the first signal corresponds to at least one search space set, the first signal may alternatively be associated with a type of the at least one search space set, and the type of the search space set is a common search space set or a UE-specific search space set. Compared with a manner in the conventional technology where when a network device needs to send a physical downlink control channel to a terminal device in a slot in which any search space set in the sleep duration exists, the terminal device needs to monitor the PDCCH in all search space sets in the sleep duration, in the foregoing design, by associating the first signal with the CORESET, the network device may indicate, by using the first signal, that the terminal device may not monitor a PDCCH in the first time period in a search space set of the CORESET associated with the first signal. Therefore, energy consumption of the terminal device can be effectively reduced.

In a possible design, when the first signal corresponds to at least one type of physical downlink control channel, the at least one type of physical downlink control channel may be a physical downlink control channel corresponding to at least one type of downlink control information DCI format. In the foregoing design, by associating the first signal with the DCI format, the network device may indicate, by using the first signal, that the terminal device may not detect, in the first time period, a PDCCH carrying DCI associated with the first signal; or a search space set in which DCI associated with the first signal is configured may not be detected in the first time period, so that energy consumption of the terminal device can be effectively reduced.

In a possible design, when the first signal corresponds to at least one type of physical downlink control channel, the at least one type of physical downlink control channel may alternatively be a physical downlink control channel scrambled by using at least one type of a radio network temporary identifier RNTI. In the foregoing design, by associating the first signal with the RNTI, the network device may indicate, by using the first signal, that the terminal device may not detect, in the first time period, a physical downlink control channel carrying DCI that is CRC scrambled by using the RNTI that corresponds to the first signal. Therefore, energy consumption of the terminal device can be effectively reduced.

In this aspect, the first signal is one of a plurality of types of first signals, and different types of first signals correspond to different search space sets or different types of physical downlink control channels.

In a possible design, a plurality of first signals may be sent to the terminal device, and types of the plurality of first signals may be different.

In a possible design, duration of the first time period may be indicated by the first signal, duration of the first time period may be preconfigured, or duration of the first time period may be agreed upon in a protocol.

In a possible design, the first signal carries first information; the first information is used to indicate a location of the first time period in a second time period. Duration of the second time period is indicated by the first signal, or duration of the second time period is preconfigured. The first time period may be all or a part of the second time period.

According to a second aspect, this application provides a communication method. The method may be applied to a terminal device, a chip in a terminal device, a chip set in a terminal device, or the like. The method includes: receiving a first signal sent by a network device, where the first signal corresponds to at least one search space set, or the first signal corresponds to at least one type of physical downlink control channel; and determining, based on the first signal, not to monitor a physical downlink control channel in the at least one search space set in a first time period, or determining, based on the first signal, not to monitor the at least one type of physical downlink control channel in a first time period.

In this implementation of this application, the terminal device may determine, based on an indication of the first signal, search space sets in which the terminal device does not monitor a PDCCH in sleep duration or types of PDCCHs that are not detected in sleep duration. Therefore, after receiving the first signal, the terminal device may not monitor a PDCCH in the search space set corresponding to the first signal in the sleep duration, but monitors a PDCCH only in another search space set, or may not monitor a PDCCH of the type corresponding to the first signal in the sleep duration, but monitors only PDCCHs of other types. Compared with a manner in the conventional technology where when a network device needs to send a physical downlink control channel to a terminal device in a slot in which any search space set in the sleep duration exists, the terminal device needs to monitor the PDCCH in all search space sets in the sleep duration, in the communication method provided in this implementation of this application, when the network device needs to send a PDCCH to the terminal device in a slot in which a search space set in the sleep duration exists, the network device may indicate, by using the first signal, that the terminal device may not detect, in the sleep duration, the PDCCH in the search space set corresponding to the first signal. Therefore, energy consumption of the terminal device can be effectively reduced.

In a possible design, when the first signal corresponds to at least one search space set, the first signal may be associated with an index of the at least one search space set. Compared with a manner in the conventional technology where when a network device needs to send a physical downlink control channel to a terminal device in a slot in which any search space set in the sleep duration exists, the terminal device needs to monitor the PDCCH in all search space sets in the sleep duration, in the foregoing design, by associating the first signal with the index of the search space set, the network device may indicate, by using the first signal, that the terminal device may not monitor a PDCCH in the first time period in the search space set associated with the first signal. Therefore, energy consumption of the terminal device can be effectively reduced.

In a possible design, when the first signal corresponds to at least one search space set, the first signal may alternatively be associated with a control resource set CORESET in which the at least one search space set exists. Compared with a manner in the conventional technology where when a network device needs to send a physical downlink control channel to a terminal device in a slot in which any search space set in the sleep duration exists, the terminal device needs to monitor the PDCCH in all search space sets in the sleep duration, in the foregoing design, by associating the first signal with the CORESET, the network device may indicate, by using the first signal, that the terminal device may not monitor a PDCCH in the first time period in a search space set of the CORESET associated with the first signal. Therefore, energy consumption of the terminal device can be effectively reduced.

In a possible design, when the first signal corresponds to at least one search space set, the first signal may alternatively be associated with a type of the at least one search space set, and the type of the search space set is a common search space set or a UE-specific search space set. Compared with a manner in the conventional technology where when a network device needs to send a physical downlink control channel to a terminal device in a slot in which any search space set in the sleep duration exists, the terminal device needs to monitor the PDCCH in all search space sets in the sleep duration, in the foregoing design, by associating the first signal with the CORESET, the network device may indicate, by using the first signal, that the terminal device may not monitor a PDCCH in the first time period in a search space set of the CORESET associated with the first signal. Therefore, energy consumption of the terminal device can be effectively reduced.

In a possible design, when the first signal corresponds to at least one type of physical downlink control channel, the at least one type of physical downlink control channel may be a physical downlink control channel corresponding to at least one type of downlink control information DCI format. In the foregoing design, by associating the first signal with the DCI format, the network device may indicate, by using the first signal, that the terminal device may not detect, in the first time period, a PDCCH carrying DCI associated with the first signal; or a search space set in which DCI associated with the first signal is configured may not be detected in the first time period, so that energy consumption of the terminal device can be effectively reduced.

In a possible design, when the first signal corresponds to at least one type of physical downlink control channel, the at least one type of physical downlink control channel may alternatively be a physical downlink control channel scrambled by using at least one type of a radio network temporary identifier RNTI. In the foregoing design, by associating the first signal with the RNTI, the network device may indicate, by using the first signal, that the terminal device may not detect, in the first time period, a physical downlink control channel carrying DCI that is CRC scrambled by using the RNTI that corresponds to the first signal. Therefore, energy consumption of the terminal device can be effectively reduced.

In this aspect, the first signal is one of a plurality of types of first signals, and different types of first signals correspond to different search space sets or different types of physical downlink control channels.

In a possible design, a plurality of first signals sent by the network device may be received, and types of the plurality of first signals may be different.

In a possible design, duration of the first time period may be indicated by the first signal, duration of the first time period may be preconfigured, or duration of the first time period may be agreed upon in a protocol.

In a possible design, the first signal carries first information; the first information is used to indicate a location of the first time period in a second time period. Duration of the second time period is indicated by the first signal, or duration of the second time period is preconfigured. The first time period may be all or a part of the second time period.

According to a third aspect, this application provides a communication apparatus. The apparatus may be a network device, or may be a chip or a chipset in a network device. Alternatively, the apparatus may be a terminal device, or may be a chip or a chip set in a terminal device. The apparatus may include a processing unit and a transceiver unit.

In a possible design, when the apparatus is a network device, the processing unit may be a processor, and the transceiver unit may be a transceiver. The apparatus may further include a storage unit, and the storage unit may be a memory. The storage unit is configured to store an instruction, and the processing unit executes the instruction stored in the storage unit, so that the network device performs a corresponding function in the first aspect. When the apparatus is a chip or a chip set in a network device, the processing unit may be a processor, the transceiver unit may be an input/output interface, a pin, a circuit, or the like. The processing unit executes instructions stored in the storage unit, so that the apparatus performs a corresponding function in the first aspect. The storage unit may be a storage unit (for example, a register or a cache) in the chip or the chip set, or may be a storage unit (for example, a read only memory or a random access memory) outside the chip or the chip set in the network device.

In a possible design, when the apparatus is a terminal device, the processing unit may be a processor, and the transceiver unit may be a transceiver. The apparatus may further include a storage unit, and the storage unit may be a memory. The storage unit is configured to store an instruction, and the processing unit executes the instruction stored in the storage unit, so that the terminal device performs a corresponding function in the second aspect. When the apparatus is a chip or a chip set in a terminal device, the processing unit may be a processor, the transceiver unit may be an input/output interface, a pin, a circuit, or the like. The processing unit executes instructions stored in the storage unit, so that the apparatus performs a corresponding function in the second aspect. The storage unit may be a storage unit (for example, a register or a cache) in the chip or the chip set, or may be a storage unit (for example, a read only memory or a random access memory) outside the chip or the chip set in the terminal device.

According to a fourth aspect, a communication apparatus is provided, including a processor, a communication interface, and a memory. The communication interface is configured to transmit information, and/or a message, and/or data between the apparatus and another apparatus. The memory is configured to store computer-executable instructions. When the apparatus runs, the processor executes the computer-executable instructions stored in the memory, so that the apparatus performs the communication method in any one of the first aspect, any design of the first aspect, the second aspect, or any design of the second aspect.

According to a fifth aspect, this application further provides a computer-readable storage medium. The computer-readable storage medium stores instructions. When the instructions are run on a computer, the computer is enabled to perform the method according to the foregoing aspects.

According to a sixth aspect, this application further provides a computer program product including an instruction. When the computer program product runs on a computer, the computer is enabled to perform the method according to the foregoing aspects.

## BRIEF DESCRIPTION OF DRAWINGS

FIG. 1 is a schematic architectural diagram of a communication system according to an implementation of this application;
FIG. 2 is a schematic diagram of a downlink time-frequency resource according to an implementation of this application;
FIG. 3 is a schematic diagram of a control channel element according to an implementation of this application;
FIG. 4 is a schematic diagram of an REG according to an implementation of this application;
FIG. 5 is a schematic diagram of a search space set according to an implementation of this application;
FIG. 6 is a schematic diagram of a CCE of a PDCCH candidate in a CORESET when an aggregation level AL is 2 according to an implementation of this application;
FIG. 7 is a schematic diagram of a search space set according to an implementation of this application;
FIG. 8 is a schematic diagram of on duration according to an implementation of this application;
FIG. 9 is a schematic diagram of an inactivity timer according to an implementation of this application;
FIG. 10 is a schematic diagram of monitoring a PDCCH by a terminal device according to an implementation of this application;
FIG. 11 is a schematic diagram of a GTS function according to an implementation of this application;
FIG. 12 is a schematic diagram of a plurality of search space sets in sleep duration according to an implementation of this application;
FIG. 13 is a schematic flowchart of a communication method according to an implementation of this application;

FIG. 14 is a schematic diagram of a correspondence between a first signal and a search space set according to an implementation of this application;

FIG. 15 is a schematic diagram of a function of a first signal according to an implementation of this application;

FIG. 16 is a schematic diagram of another function of a first signal according to an implementation of this application;

FIG. 17 is a schematic diagram showing that two search space sets are associated with a same CORESET according to an implementation of this application;

FIG. 18 is a schematic structural diagram of a communication apparatus according to an implementation of this application; and

FIG. 19 is a schematic structural diagram of a communication apparatus according to an implementation of this application.

## DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

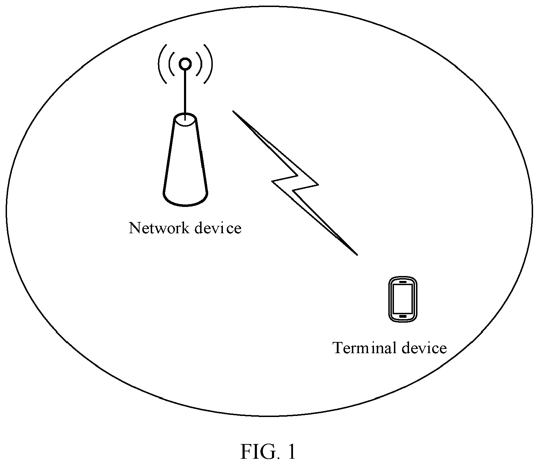

A communication method provided in this application may be applied to a communication system, and the communication system may be a single carrier, or may be a multicarrier. An architecture of the communication system is shown in FIG. 1, and includes a network device and a terminal device. Uplink data transmission and downlink data transmission are performed between the network device and the terminal device. In the communication system, the terminal device performs uplink data transmission based on scheduling information sent by the network device. The communication system in the implementations of this application may be various communication systems, for example, may be a long term evolution (long term evolution, LTE) system, a fifth generation (5G) communication system, a universal terrestrial radio access (universal terrestrial radio access, UTRA) system, an evolved UTRA network (E-UTRAN), a new radio (new radio, NR) system, a GSM/EDGE radio access network-circuit switched domain (GSM EDGE radio access network - circuit switched, GERAN-CS) system, a GSM/EDGE radio access network- packet switched domain (GSM EDGE radio access network - packet switched, GERAN-PS) system, a code division multiple access (code division multiple access, CDMA) 2000-1XRTT system, a multi-radio access technology dual-connection (Multi-RAT Dual-Connectivity, MR-DC) system, or the like, or may be a hybrid architecture of a plurality of communication systems, such as a hybrid architecture of LTE and 5G.

The network device may be a common base station (for example, a Node B or an eNB), a new radio controller (new radio controller, NR controller), a gNodeB (gNB) in a 5G system, a centralized network element (centralized unit), a new radio base station, a radio remote module, a micro base station, a relay (relay), a distributed network element (distributed unit), a transmission reception point (transmission reception point, TRP), a transmission point (transmission point, TP), or any other radio access device. However, this is not limited in the implementations of this application.

The terminal device is also referred to as user equipment (User Equipment, UE), and is a device, for example, a handheld device or a vehicle-mounted device having a wireless connection function, providing voice and/or data connectivity for a user. A common terminal includes, for example, a mobile phone, a tablet, a notebook computer, a palmtop computer, a mobile internet device (mobile internet device, MID), and a wearable device such as a smartwatch, a smart band, or a pedometer.

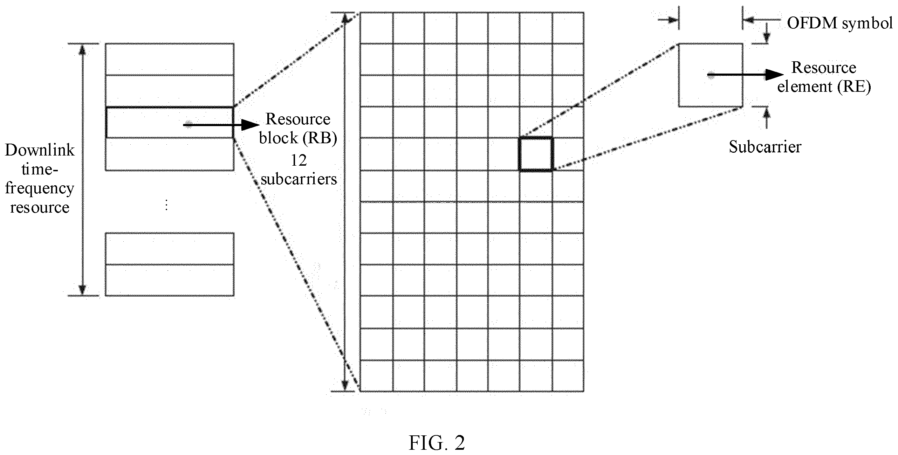

In NR, a basic unit in frequency domain is one subcarrier, and a subcarrier spacing (subcarrier spacing, SCS) may be 15 kHz, 30 kHz, or the like. At an NR physical layer, a unit of an uplink/downlink frequency domain resource is a physical resource block (physical resource block, PRB), and each PRB includes 12 consecutive subcarriers in frequency domain. For a downlink time-frequency resource grid, refer to FIG. 2. Each element in the resource grid is referred to as a resource element (resource element, RE). The RE is a smallest physical resource and includes one subcarrier in one OFDM symbol. A basic time unit for downlink resource scheduling in NR is a slot (slot). Generally, a slot includes 14 OFDM symbols in time. An uplink time-frequency resource grid is similar to a downlink time-frequency resource grid. For details, refer to related descriptions of a downlink time-frequency resource.

The network device transmits a physical downlink shared channel (physical downlink shared channel, PDSCH) and a physical downlink control channel (physical downlink control channel, PDCCH) for the terminal device. To correctly receive the PDSCH, the terminal device needs to first demodulate related information that is required for receiving the PDSCH and that is included in downlink control information (downlink control information, DCI) carried in the PDCCH, for example, a location and size of a PDSCH time-frequency resource, and multi-antenna configuration information. The PDCCH is transmitted in a control resource set (control-resource set, CORESET). The CORESET includes a plurality of PRBs in frequency domain, includes one to three OFDM symbols in time domain, and may be at any location in a slot.

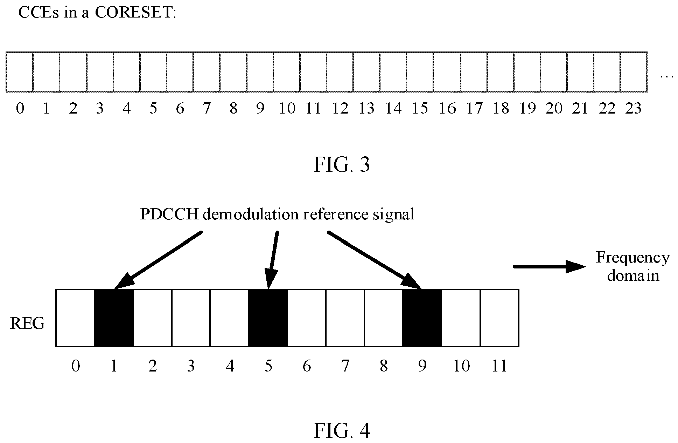

A control channel element (control-channel element, CCE) is a basic unit constituting a PDCCH, and each CCE in a CORESET has a corresponding index number. Refer to FIG. 3. One PDCCH may consist of 1, 2, 4, 8, or 16 CCEs, and a specific quantity of CCEs is determined by a DCI payload size (DCI payload size) and a required coding rate. The quantity of CCEs constituting the PDCCH is also referred to as an aggregation level (aggregation level, AL). The network device may adjust an aggregation level of a PDCCH based on an actual transmission radio channel status, to implement link adaptive transmission. One CCE corresponds to six resource element groups (resource-element group, REG) on a physical resource. The REG occupies one OFDM symbol in time domain, and occupies one resource block in frequency domain (that is, includes 12 subcarriers consecutive in frequency domain) as shown in FIG. 4.

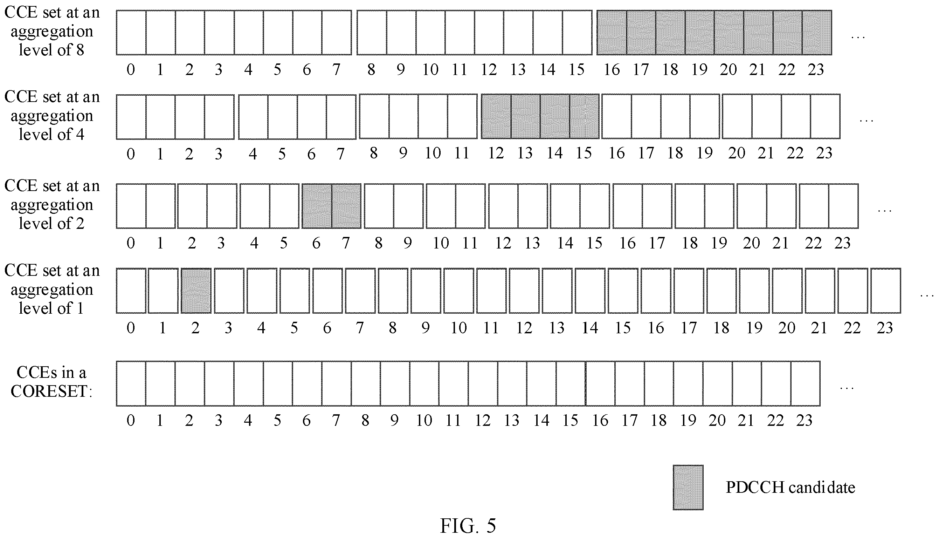

A search space (search space) is a set of PDCCH candidates (PDCCH candidate) at an aggregation level, as shown in FIG. 5. Because an aggregation level of a PDCCH actually sent by the network device changes with time, and because there is no related signaling notifying the terminal device, the terminal device needs to blindly monitor a PDCCH at different aggregation levels, and a PDCCH that is to be detected blindly is referred to as a PDCCH candidate. There may be a plurality of PDCCH candidates at one aggregation level. The terminal device decodes, in the search space, all PDCCH candidates that consist of CCEs. If CRC check passes, the terminal device considers that content of the decoded PDCCHs is valid for the terminal device, and processes decoded related information.

In NR, to better control complexity of blind detection of a downlink control channel, the network device may configure one or more search space sets (Search Space Set) for the terminal device, where each search space set includes search spaces of one or more aggregation levels. In other words, the search space set includes one or more aggregation levels and a quantity of PDCCH candidates corresponding to each aggregation level.

The search space set may be classified into two types: a common search space set (common search space set) and a UE-specific search space set (UE-specific search space set). The PDCCH in the common search space set is mainly used to indicate to receive a system message, a random access response, a paging message, and the like. In an existing NR protocol, a common search space set is a search space set of Type 0/0A/1/2/3. The PDCCH in the UE-specific search space set is used to schedule uplink/downlink data for a corresponding terminal device.

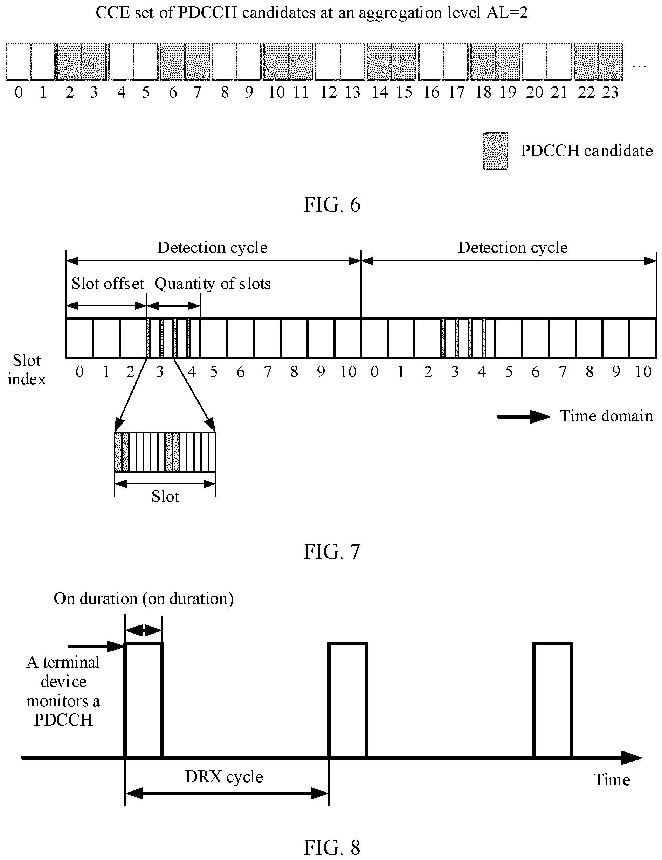

When configuring a search space set for the terminal device, the network device configures an index number and an index number of a CORESET associated with the search space set for each search space set. The CORESET associated with the search space set determines a CCE index of a PDCCH candidate in the search space set in the CORESET. For example, there are 24 CCEs in the CORESET in total, and a quantity of PDCCH candidates corresponding to an aggregation level AL of 2 in the search space set is 6. In this case, a CCE index number of each PDCCH candidate in the CORESET may be shown in FIG. 6.

In time domain, the terminal device monitors a PDCCH candidate in a search space set at a specific time interval. Therefore, some time domain configuration information is configured for each search space set, including:

Detection period: an interval for monitoring a search space set, in slot.

Slot offset: a slot offset between a start of a detection period and a time point when actual detection search space set is performed, and the offset is less than a value of the detection period.

Quantity of slots: a quantity of slots in a search space set that is continuously detected, and a quantity of slots is less than a value of a detection period.

Symbol location: a location of a CORESET start symbol associated with a search space set in each slot.

For ease of understanding, a specific example is used to describe a meaning of each parameter. As shown in FIG. 7, a detection period is 10 slots, a slot offset is 3 slots, a quantity of slots is 2 slots, and a CORESET associated with a search space set is a CORESET that occupies two OFDM symbols. Symbol locations are an OFDM symbol 0 and an OFDM symbol 7 in the slot. In the foregoing example, the terminal device monitors a PDCCH candidate in a search space set in a CORESET on a symbol 0 and a symbol 7 in a slot 3 and a slot 4 in each 10-slot period, and the CORESET occupies two OFDM symbols in time domain.

DCI is classified into different formats according to types of indication information. For example, a DCI format (DCI format) for scheduling uplink data transmission is Format 0_0, and a DCI format for scheduling downlink data transmission is Format 1_0. A DCI format for indicating a slot format is Format 2_0. Different DCI formats have different DCI sizes, and each format corresponds to a DCI size or parsing manner. In NR, DCI formats are shown in Table 1. When configuring a search space set, the network device configures a DCI format of the search space set, for example, Format 0_1/1_1.

**Table 1**

| Format | Information size | Type of indication information | | | | |
|---|---|---|---|---|---|---|
| | | Uplink scheduling | Downlink scheduling | Power control command | Slot format indication | Resource occupation indication |
| 0_0 | Small | √ | | | | |
| 0_1 | Big | √ | | | | |
| 1_0 | Small | | √ | | | |
| 1_1 | Big | | √ | | | |
| 2_0 | - | | | | √ | |
| 2_1 | - | | | | | √ |
| 2_2 | Small | | | √ | | |
| 2_3 | Small | | | √ | | |

Cyclic redundancy check (cyclic redundancy check, CRC) of DCI in different formats may be scrambled by radio-network temporary identifiers (radio-network temporary identifier, RNTI) temporarily indicated by different radio networks. For example, CRC of DCI for scheduling a terminal device is scrambled by a cell radio network temporary identifier (cell radio network temporary identifier, C-RNTI). CRC of DCI for scheduling system information data is scrambled by system information RNTI (system information RNTI, SI-RNTI).

In NR, the terminal may be in different states, and one state is an RRC_CONNECTED state, that is, a radio resource control (RRC, Radio Resource Control) connected state. In the RRC_CONNECTED state, the terminal device has established an RRC context (context), in other words, a parameter necessary for communication between the terminal device and a radio access network is known to both the terminal device and the radio access network. The RRC _CONNECTED state is mainly used for sending/receiving data transmission of the terminal.

In a communication system, when a terminal device is in an RRC _CONNECTED state, if there is no discontinuous reception (discontinuous reception, DRX) mechanism, the terminal device keeps monitoring a PDCCH subframe. Generally, a packet-based data stream is usually bursty. In reality, for many services, such as a web page browsing service, information exchange does not always exist between the terminal device and the network device, but there is a specific time interval. If the terminal device keeps monitoring a PDCCH, electricity consumption of the terminal device is caused. Therefore, on the premise that data transmission is ensured to be effective, a DRX mechanism is designed in the wireless communication system, where in the DRX mechanism, the terminal device periodically enters a sleep state at some time and skips monitoring a PDCCH subframe, and the terminal device is woken up from the sleep state when a PDCCH needs to be monitored. This achieves the purpose of saving power.

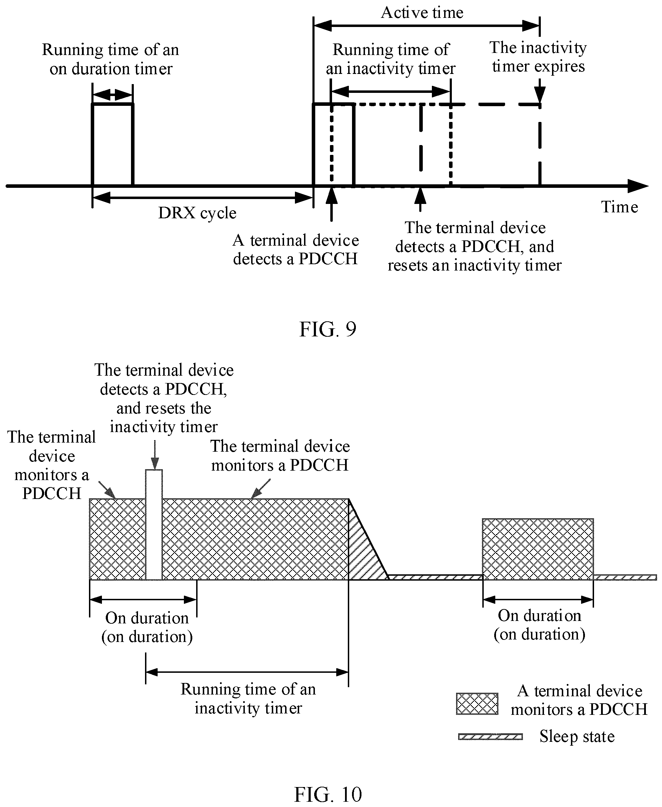

In DRX, the network device may configure a DRX cycle (DRX cycle) for the terminal device in the RRC connected state, and the DRX cycle includes a time zone of an on duration (on duration), as shown in FIG. 8. The terminal device may monitor a PDCCH in a time of the on duration. The terminal device starts a timer at a time start location of the on duration. Duration of the timer equals to duration of the on duration. The timer may be referred to as a DRX on duration timer (DRX-onDurationTimer). The terminal device monitors a PDCCH in a timing range of the DRX-onDurationTimer. If the terminal device detects no PDCCH in the timing range of DRX-onDurationTimer, the terminal device enters the sleep state after the DRX-onDurationTimer expires, to be specific, the terminal device may disable a receiving circuit in a remaining time period of the DRX cycle, so that power consumption of the terminal is reduced. If the terminal device detects a PDCCH in the timing range of DRX-onDurationTimer, the terminal device starts a DRX inactivity timer (DRX-InactivityTimer) of the DRX mechanism. If the terminal device has continuously detected a PDCCH in a running time of the DRX-InactivityTimer, the terminal device resets the DRX-InactivityTimer and restarts counting. If the DRX-InactivityTimer is running, even if the DRX-onDurationTimer previously configured expires (that is, the on duration time ends), the terminal device still needs to continue to monitor a PDCCH until the inactivity timer expires, as shown in FIG. 9. In the DRX mechanism, there are other timers than a DRX downlink/uplink retransmission timer (DRX-RetransmissionTimerDL and DRX-RetransmissionTimerUL). When any one of the DRX-onDurationTimer, the DRX-InactivityTimer, the DRX-RetransmissionTimerDL, the DRX-RetransmissionTimerUL, or the DRX-RetransmissionTimerDL is running, the terminal device is in an active time ("Active Time"). In the DRX mechanism, if the terminal device is in the active time, the terminal device continuously monitors a PDCCH.

If the terminal device detects a PDCCH in a running time of the DRX-onDurationTimer, the terminal device enables the DRX-InactivityTimer. Considering a delay requirement for scheduling data, the running time of the DRX-InactivityTimer is generally much longer than the running time of the DRX-onDurationTimer. When the network device performs data scheduling for the terminal device once, the terminal device enables/resets the DRX-InactivityTimer, and continues to monitor a PDCCH in a long time period. In this time period, the network device may not schedule any data for the terminal device, as shown in FIG. 10. In this case, unnecessary energy consumption is generated for the terminal device.

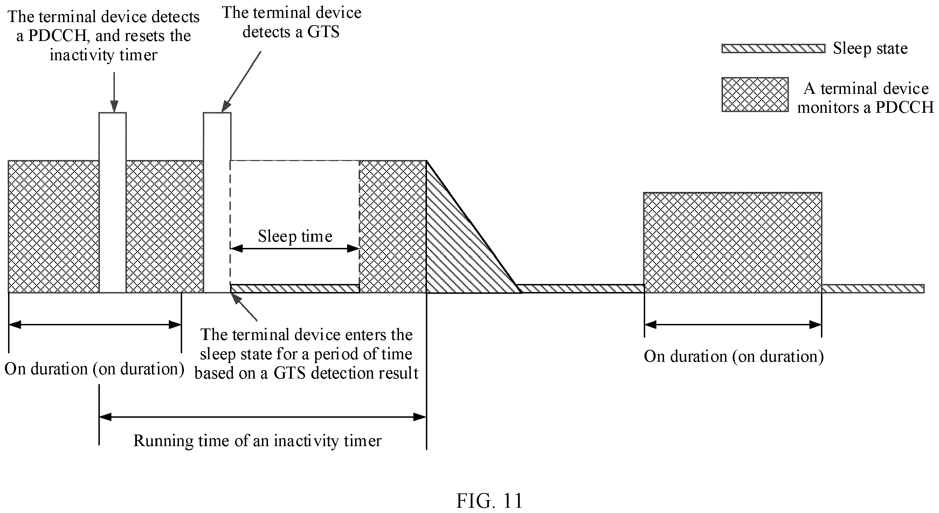

Therefore, to reduce power consumption, a go to sleep signal (go to sleep, GTS) may be introduced, in combination with a DRX mechanism in an RRC_CONNECTED state, to NR, as shown in FIG. 11. For a terminal device that supports the GTS signal, in the DRX-onDurationTimer or the DRX-InactivityTimer (or the active time) of the terminal device, the network device may perform discontinuous transmission (discontinuous transmission) for the terminal device on a GTS occasion (occasion). The GTS signal is sent in a DTX manner, to be specific, the network device determines, based on a requirement of scheduling data, whether to send the GTS signal on the GTS occasion, and the terminal device needs to determine, through monitoring the GTS signal on the GTS occasion, whether the network device sends the GTS signal.

For a GTS, a possible function is to indicate sleep duration (sleep time or sleep duration) of a terminal device. As shown in FIG. 11, if the network device determines that no data needs to be scheduled for the terminal device and no PDCCH needs to be sent in a continuous period of time T in the running time of the DRX-InactivityTimer, then the network device may indicate the sleep duration T of the terminal device by using the GTS. The terminal device may enter the sleep state in the sleep duration T, disable some radio frequency or baseband circuits, or skip monitoring a PDCCH in the sleep duration T, and may wake up again to monitor a PDCCH after the sleep duration T. In this manner, unnecessary energy consumption of the terminal device can be reduced.

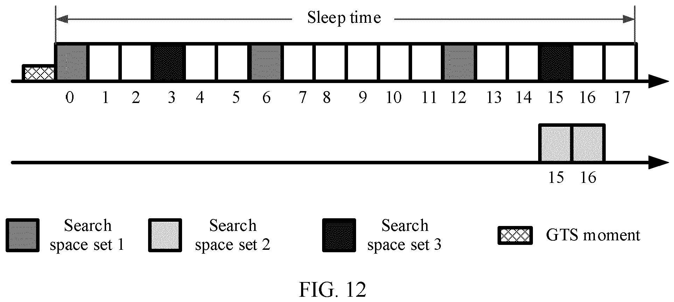

However, the terminal device may need to monitor a plurality of search space sets in the sleep duration, and parameters such as a function and a detection period of each search space set are different, as shown in FIG. 12. As long as the network device needs to send a PDCCH to the terminal device in a slot in which any search space set in the sleep duration exists, the network device does not send the GTS signal to the terminal device. In this case, the terminal device needs to monitor a physical downlink control channel in all search space sets in the sleep duration, which is not conducive to power consumption reduction of the terminal device.

Based on this, the implementations of this application provide a communication method and apparatus, to resolve a problem that unnecessary energy consumption is generated when a terminal device monitors a PDCCH. In the implementations of this application, the network device may indicate, by using a first signal, search space sets in which the terminal device does not monitor a PDCCH in a first time period, or indicate, by using a first signal, types of PDCCHs that the terminal device does not monitor in a first time period. Therefore, after receiving the first signal, the terminal device may not monitor a PDCCH in a search space set corresponding to the first signal in the first time period, but monitors a PDCCH only in another search space set, or may not monitor a PDCCH of the type corresponding to the first signal in the first time period, but monitors only PDCCHs of other types. The first time period may be a sleep time or sleep duration, or may be a part of a sleep time or sleep duration. Compared with a manner in the conventional technology where when a network device needs to send a physical downlink control channel to a terminal device in a slot in which any search space set in the sleep duration exists, the terminal device needs to monitor the PDCCH in all search space sets in the first time period, in the communication method provided in the implementations of this application, the network device needs to send a PDCCH to the terminal device in a slot in which a search space set in the sleep duration exists. When the network device does not need to send a PDCCH to the terminal device in a slot in which a search space set in the sleep duration exists, the network device may indicate, by using the first signal, that the terminal device may not detect, in the first time period, a PDCCH in the search space set corresponding to the first signal. Therefore, energy consumption of the terminal device can be effectively reduced. The method and the apparatus are based on a same inventive concept. Because a problem-resolving principle of the method is similar to that of the apparatus, implementations of the apparatus and the method may refer to each other, and no repeated description is provided.

"A plurality of" mentioned in the implementations of this application means two or more.

In addition, it should be understood that, in the description of the implementations of this application, terms such as "first" and "second" are only used for a purpose of distinguishing between descriptions, but cannot be understood as indication or implication of relative importance, and cannot be understood as an indication or implication of a sequence.

The following describes in detail the communication method provided in the implementations of this application with reference to the accompanying drawings.

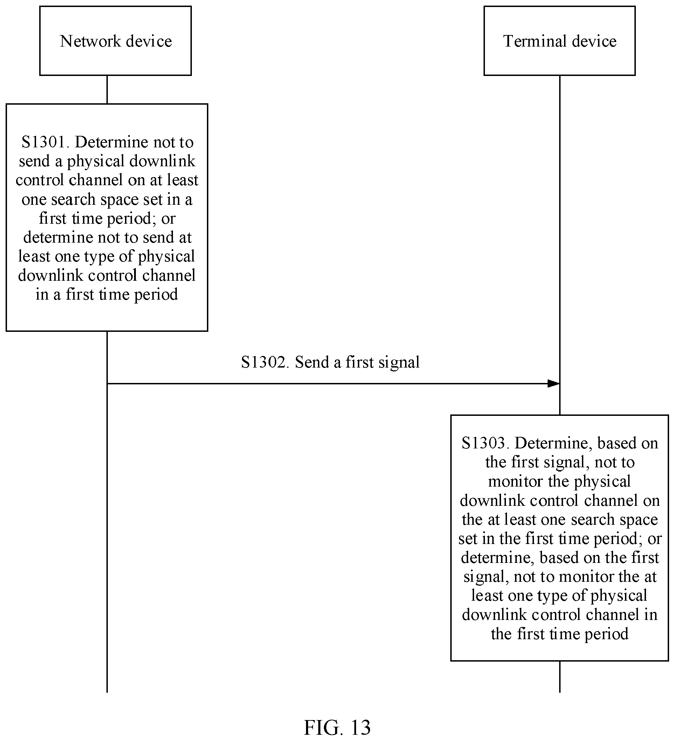

FIG. 13 is a flowchart of a communication method according to this application. The communication method provided in this application may be applied to a communication device, a chip in a communication device, a chip set in a communication device, or the like. The communication device may be a network device or a terminal device. The following uses an example in which the method is applied to a communication device for description, and the method includes the following steps.

S1301. A network device determines not to send a physical downlink control channel in at least one search space set in a first time period, or determines not to send at least one type of physical downlink control channel in a first time period.

S1302. The network device sends a first signal to a terminal device, where the first signal corresponds to the at least one search space set, or the first signal corresponds to the at least one type of physical downlink control channel. Correspondingly, the terminal device receives the first signal sent by the network device.

In a possible implementation, the first signal may be used to indicate that the terminal device does not detect, in the first time period, a candidate control channel in the search space set corresponding to the first signal, but monitors a candidate control channel in another search space set. Alternatively, the first signal may be used to indicate that the terminal device does not detect, in the first time period, the physical downlink control channel corresponding to the first signal, but monitors another physical downlink control channel.

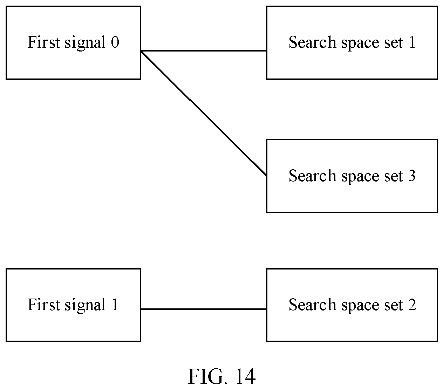

The first signal is one of a plurality of types of first signals, and different types of first signals correspond to different search space sets or different types of physical downlink control channels. For example, as shown in FIG. 14, a first signal of a type 0 corresponds to a search space set 1 and a search space set 3, and a first signal of a type 1 corresponds to a search space set 2.

During specific implementation, the network device may alternatively send a plurality of first signals to the terminal device, where the plurality of first signals are first signals of different types.

An example in which one first signal is sent is used for description below. A manner in which the network device sends a plurality of first signals to the terminal device is similar to a process in which the network device sends one first signal. For details, refer to the process in which the network device sends one first signal to the terminal device.

During specific implementation, there is no strict time sequence between step S1301 and step S1302. Step S1301 may be performed first and then step S1302 may be performed, or step S1302 may be performed first and then step S1301 may be performed.

S1303. The terminal device determines, based on the first signal, not to monitor the physical downlink control channel in the at least one search space set in the first time period, or determines, based on the first signal, not to monitor the at least one type of physical downlink control channel in the first time period.

Compared with a manner in the conventional technology where when a network device needs to send a physical downlink control channel to a terminal device in a slot in which any search space set in the sleep duration exists, the terminal device needs to monitor the PDCCH in all search space sets in the first time period, in the communication method provided in the implementations of this application, the network device needs to send a PDCCH to the terminal device in a slot in which a search space set in the sleep duration exists. When the network device does not need to send a PDCCH to the terminal device in a slot in which a search space set in the sleep duration exists, the network device may indicate, by using the first signal, that the terminal device may not detect, in the first time period, a PDCCH in the search space set corresponding to the first signal. Therefore, energy consumption of the terminal device can be effectively reduced.

When the first signal corresponds to at least one search space set, the first signal may be associated with an index of the at least one search space set. Using FIG. 14 as an example, if the network device determines not to send a PDCCH in the search space set 1 and the search space set 3, the network device may send the first signal of the type 0 to the terminal device. After receiving the first signal of the type 0, the terminal device determines not to monitor a physical downlink control channel in the search space set 1 and the search space set 3 in the first time period.

An association relationship between the first signal and an index of a search space set may be configured by using higher layer signaling, where to be specific, an index number of the search space set associated with the first signal is configured by using higher layer signaling, may be configured in a predefinition manner, or may be agreed upon in a protocol.

Alternatively, the first signal may be associated with a control resource set CORESET in which the at least one search space set exists. For example, if the first signal corresponds to a CORESET 1 and a CORESET 4, the search space sets corresponding to the first signal are all search space sets of the CORESET 1 and the CORESET 4. After receiving the first signal, the terminal device determines not to monitor a physical downlink control channel in all the search space sets of the CORESET 1 and the CORESET 4 in the first time period.

An association relationship between the first signal and a CORESET may be configured by using higher layer signaling, where to be specific, an index number of the CORESET associated with the first signal is configured by using higher layer signaling, may be configured in a predefinition manner, or may be agreed upon in a protocol.

Alternatively, the first signal may be associated with a type of the at least one search space set, and the type of the search space set is a common search space set or a UE-specific search space set. For example, the first signal is associated with a UE-specific search space set. To be specific, if a search space set is configured to be UE-specific, the search space set is directly associated with the first signal, and the search space set corresponding to the first signal is all search space sets configured to be UE-specific. After receiving the first signal, the terminal device determines not to detect, in the first time period, a physical downlink control channel candidate in all the search space sets configured to be UE-specific.

Similarly, if the first signal is associated with the common search space set, a search space set whose type is configured to be Type 0/0A/1/2/3 is directly associated with the first signal, and a search space set corresponding to the first signal is the search space set configured to be Type 0/0A/1/2/3. After receiving the first signal, the terminal device determines not to detect, in the first time period, a physical downlink control channel candidate in the search space set configured to be Type 0/0A/1/2/3.

The network device may configure, by using higher layer signaling, in a predefinition manner or through agreement in a protocol, a type of the search space set associated with the first signal.

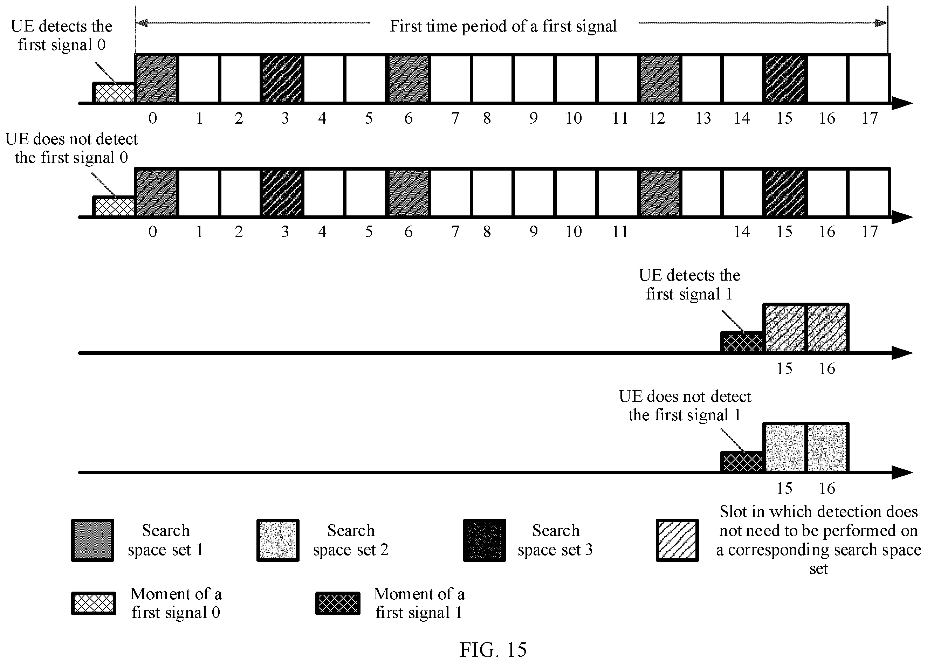

It should be noted that not each search space set of the terminal device is necessarily associated with one first signal. In other words, there may be a search space set not associated with any first signal. For a search space set that is not associated with any first signal, the terminal device may still monitor a PDCCH candidate in the search space set in the sleep duration. For example, as shown in FIG. 15, if the network device sends the first signal to the terminal device, the first signal corresponds to search space sets whose index numbers are 1 and 3, and a search space set whose index number is 2 is not associated with any first signal. If the terminal device detects the first signal, the terminal device may not monitor PDCCH candidates in the search space set 1 and the search space set 3 in the first time period of the first signal, but still needs to monitor a PDCCH candidate in the search space set 2. Alternatively, the network device sends the first signal to the terminal device, and the first signal is associated with a UE-specific search space set. The terminal device may not detect, in the first time period of the first signal, a physical downlink control channel candidate in all the search space sets configured to be UE-specific. However, a physical downlink control channel candidate in a common search space may still be detected.

When the first signal corresponds to at least one type of physical downlink control channel, the at least one type of physical downlink control channel may be a physical downlink control channel corresponding to at least one type of downlink control information DCI format. For example, the first signal may be associated with a DCI format 0_1/1_1, and a physical downlink control channel corresponding to the first signal is a physical downlink control channel carrying the DCI format 0_1/1_1. After receiving the first signal, the terminal device determines not to detect, in the first time period, the PDCCH carrying the DCI format 0_1/1_1, or not to detect, in the first time period, a search space set configured with the DCI format 0_1/1_1.

The network device may configure, by using higher layer signaling in a predefinition manner or through agreement in a protocol, a DCI format associated with the first signal.

Alternatively, the at least one type of physical downlink control channel may be a physical downlink control channel scrambled by using at least one type of radio network temporary identifier RNTI. For example, if the first signal may be associated with a C-RNTI, the physical downlink control channel corresponding to the first signal is a physical downlink control channel scrambled by using the C-RNTI. Further, the physical downlink control channel corresponding to the first signal may be a physical downlink control channel carrying DCI that is CRC scrambled by using the C-RNTI. After receiving the first signal, the terminal device determines not to detect, in the first time period, the physical downlink control channel carrying the DCI that is CRC scrambled by using the C-RNTI.

The network device may configure, by using higher layer signaling in a predefinition manner or through agreement in a protocol, an RNTI type associated with the first signal.

In an example, duration of the first time period may be indicated by the first signal, or duration of the first time period may be preconfigured, or duration of the first time period may be agreed upon in a protocol. It should be noted that different types of first signals may correspond to first time periods of same duration. Alternatively, different types of first signals may correspond to first time periods of different duration. For example, duration of a first time period corresponding to a first signal of the type 0 is 8 slots, and duration of a first time period corresponding to a first signal of the type 1 is 2 slots. In this example, the first time period may be a sleep time or sleep duration corresponding to the first signal.

In another example, the first signal may carry first information, the first information is used to indicate a location of the first time period in a second time period, and the first time period may be a part or all of the second time period. Duration of the second time period may be indicated by the first signal, duration of the second time period may be preconfigured, or duration of the second time period may be agreed upon in a protocol. In this example, the second time period may be a sleep time or sleep duration corresponding to the first signal, and the first time period may be a part or all of the sleep time or the sleep duration.

In an example, the first information may include n bits, and the n bits are used to indicate slots that are in the second time period and in which the terminal device may not monitor the PDCCH in the search space set corresponding to the first signal. In other words, the n bits are used to indicate the location of the first time period in the second time period. A value of n may be configured by using higher layer signaling, may be predefined, or may be specified in a protocol. Each bit in the n bits corresponds to at least one slot in the second time period.

If the second time period includes M slots, each bit in the n bits corresponds to $\lfloor M/n \rfloor$ or $\lceil M/n \rceil$ slots in the second time period. For example, the duration of the second time period is 18 slots, and two bits in the first information carried in the first signal may be used to indicate slots that are in the second time period and in which the terminal device may not monitor the PDCCH in the search space set 1 and the search space set 3 that are corresponding to the first signal. The first bit may correspond to slots numbered 0 to 8 in the second time period, that is, the first nine slots in the second time period. The second bit may correspond to slots numbered 9 to 17 in the second time period, that is, the last nine slots in the second time period.

Therefore, after the terminal device detects the first signal, the terminal device may further parse the first information carried in the first signal, especially indication information of the n bits in the first information. The terminal device may determine, based on the indication information of the n bits, slots that are in the second time period and in which a PDCCH candidate in the search space set corresponding to the first signal needs to be detected and slots that are in the second time period and in which the PDCCH candidate in the search space set corresponding to the first signal does not need to be detected. For example, when one of the n bits is "1", the terminal device does not need to detect, in a slot corresponding to the bit, the PDCCH candidate in the search space set corresponding to the first signal. When a bit is "0", the terminal device needs to detect, in a slot corresponding to the bit, the PDCCH candidate in the search space set corresponding to the first signal.

In a corresponding slot in the second time period, based on a detection result of the first signal, the terminal device determines not to monitor the candidate control channel in the search space set corresponding to the first signal, or determines that the candidate control channel in the search space set corresponding to the first signal needs to be detected. After the second time period elapses, the terminal device may resume monitoring the candidate control channel in the search space set corresponding to the first signal, or restart monitoring the first signal.

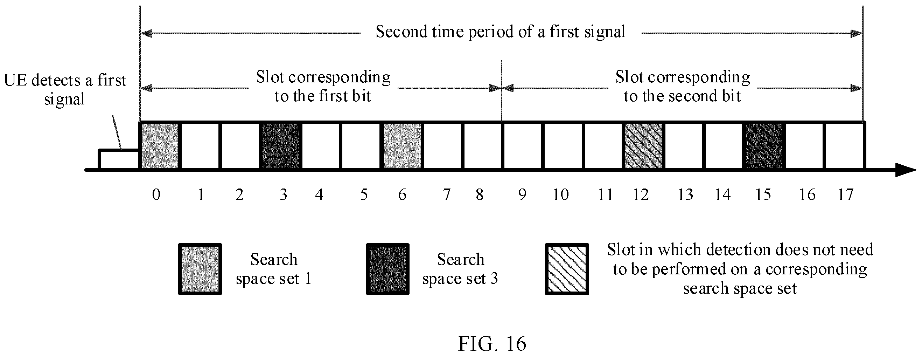

For example, if the duration of the second time period is 18 slots (numbered 0 to 17 sequentially), and two bits in the first information carried in the first signal may be used to indicate slots that are in the second time period and in which the terminal device may not monitor a PDCCH in the search space set 1 and the search space set 3 corresponding to the first signal. The first bit may correspond to slots numbered 0 to 8 in the second time period, that is, the first nine slots in the second time period. The second bit may correspond to slots numbered 9 to 17 in the second time period, that is, the last nine slots in the second time period. The first signal corresponds to a search space set 1 and a search space set 3, slots in which the search space set 1 exists are numbered 0, 6, and 12 in the second time period, and slots in which the search space set 3 exists are numbered 3 and 15 in the second time period. When the terminal device detects the first signal, and indication information of 2 bits in the first information carried in the first signal is "01", as shown in FIG. 16, the terminal device needs to monitor the search space set 1 in the slots numbered 0 and 6 in the second time period, and does not need to monitor the search space set 1 in the slot numbered 12. In addition, the terminal device needs to monitor the search space set 3 in the slot numbered 3 in the second time period, but does not need to monitor the search space set 3 in the slot numbered 15.

To better understand this implementation of this application, an example in which the first signal corresponds to at least one search space set is used below to specifically describe a communication process between the network device and the terminal device. It should be understood that this is merely an example for description, and does not specifically limit the search space set corresponding to the first signal, the first time period, and the like. It is assumed that slots are sequentially numbered 0 to 17. It should be noted that a slot number herein is not equivalent to a slot index number. The slots are sequentially numbered herein for ease of description.

FIG. 14 is used as an example. Search space sets corresponding to the first signal of the type 0 is the search space set 1 and the search space set 3, and a search space set corresponding to the first signal of the type 1 is the search space set 2. The first time period corresponding to the first signal of the type 0 is slots numbered 0 to 17. The first time period corresponding to the first signal of the type 1 is slots numbered 15 and 16. Referring to FIG. 15, slots in which the search space set 1 exists are numbered 0, 6, and 12, slots in which the search space set 3 exists are numbered 3 and 15, and slots in which the search space set 2 exists are numbered 15 and 16.

If the terminal device detects the first signal of the type 0 on an occasion of the first signal of the type 0, the terminal device may skip monitoring PDCCH candidates in the search space sets 1 and 3 in the first time period of the first signal of the type 0. That is, the PDCCH candidate in the search space set 1 is not detected in the slots numbered 0, 6, and 12, and a PDCCH candidate in the search space set 3 is not detected in the slots numbered 3 and 15. If the terminal device does not detect the first signal of the type 0 on the occasion of the first signal of the type 0, the terminal device needs to monitor a PDCCH candidate in the search space set 1 in the slots numbered 0, 6, and 12, and monitor a PDCCH candidate in the search space set 3 in the slots numbered 3 and 15.

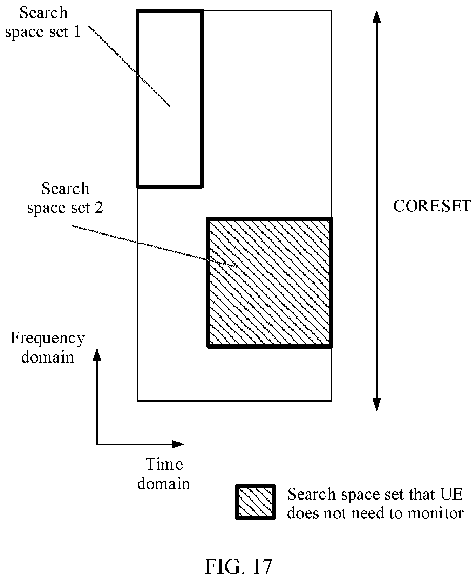

Similarly, if the terminal device detects the first signal of the type 1 on an occasion of the first signal of the type 1, the terminal device may not monitor a PDCCH candidate in the search space set 2 in the first time period of the first signal of the type 1. That is, a PDCCH candidate in the search space set 2 is not detected in the slots numbered 15 and 16. If the terminal device does not detect the first signal of the type 1 on the occasion of the first signal of the type 1, the terminal device needs to monitor a PDCCH candidate in the search space set 2 in the slots numbered 15 and 16. It should be noted that both the search space set 2 and the search space set 3 are on the slot numbered 15. In this case, the terminal device may monitor only the search space set 2 in the slot, thereby reducing a quantity of PDCCHs that are blindly detected in the slot. FIG. 17 shows a case in which the two search space sets are associated with a same CORESET. In this case, the terminal device monitors a PDCCH only on a resource to which a PDCCH candidate in the search space set 2 in the CORESET is mapped.

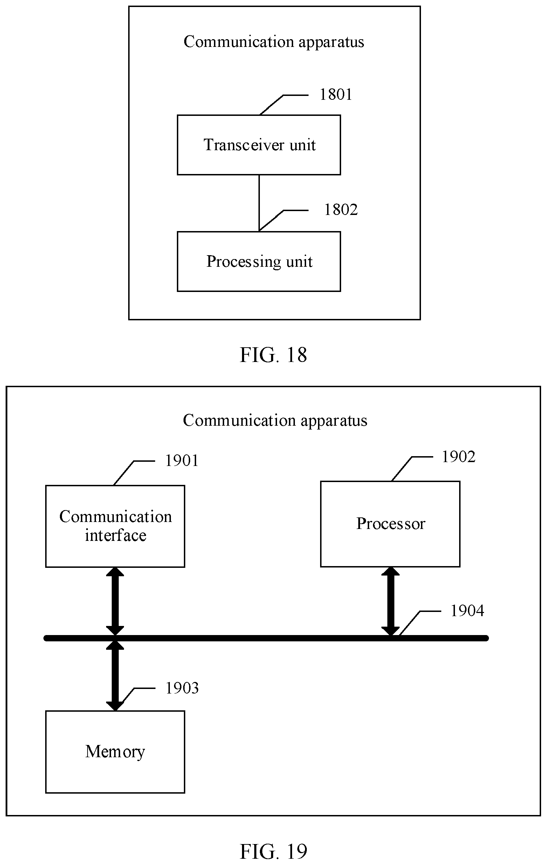

Based on a same inventive concept as the method implementation, an implementation of this application provides a communication apparatus, specifically configured to implement the method described in the implementation in FIG. 13 to FIG. 17. The device may be the communication apparatus, or may be a chip, a chip group, a chip, or a part of a chip in the communication apparatus that is configured to perform a related method function. A structure of the communication apparatus may be shown in FIG. 18, and includes a transceiver unit 1801 and a processing unit 1802.

In an implementation, the communication apparatus may be a network device. The transceiver unit 1801 is configured to send a first signal to a terminal device, where the first signal corresponds to at least one search space set, or the first signal corresponds to at least one type of physical downlink control channel. The processing unit 1802 is configured to: determine not to send a physical downlink control channel in the at least one search space set in a first time period; or determine not to send the at least one type of physical downlink control channel in a first time period.

In another implementation, the communication apparatus may be a terminal device. The transceiver unit 1801 is configured to receive a first signal sent by a network device, where the first signal corresponds to at least one search space set, or the first signal corresponds to at least one type of physical downlink control channel. The processing unit 1802 is configured to: determine, based on the first signal, not to monitor a physical downlink control channel in the at least one search space set in a first time period; or determine, based on the first signal, not to monitor the at least one type of physical downlink control channel in a first time period.

In an example, when the first signal corresponds to at least one search space set, the first signal may be associated with an index of the at least one search space set. Alternatively, the first signal may be associated with a control resource set CORESET in which the at least one search space set exists. Alternatively, the first signal may alternatively be associated with a type of the at least one search space set, and the type of the search space set is a common search space set or a UE-specific search space set.

In another example, when the first signal corresponds to at least one type of physical downlink control channel, the at least one type of physical downlink control channel may be a physical downlink control channel corresponding to at least one type of downlink control information DCI format. Alternatively, the at least one type of physical downlink control channel may be a physical downlink control channel scrambled by using at least one type of radio network temporary identifier RNTI.

The first signal is one of a plurality of types of first signals, and different types of first signals correspond to different search space sets or different types of physical downlink control channels.

In an example, duration of the first time period may be indicated by the first signal, or duration of the first time period may be preconfigured.

In an implementation, the first signal carries first information; the first information is used to indicate a location of the first time period in a second time period. Duration of the second time period may be indicated by the first signal, or duration of the second time period may alternatively be preconfigured.

Division into modules in the implementations of this application is an example, is only logical function division, and may be other division in an actual implementation. In addition, function modules in the implementations of this application may be integrated into one processor, or may exist alone physically, or two or more modules are integrated into one module. The foregoing integrated module may be implemented in a form of hardware, or may be implemented in a form of a software function module.

When the integrated module may be implemented in a form of hardware, a signal sending apparatus may be shown in FIG. 19, and the processing unit 1802 may be a processor 1902. The processor 1902 may be a central processing module (central processing unit, CPU), a digital processing module, or the like. The transceiver unit 1801 may be a communication interface 1901. The communication interface 1901 may be a transceiver, or may be an interface circuit such as a transceiver circuit, or may be a transceiver chip, or the like. The signal sending apparatus further includes a memory 1903, configured to store a program executed by the processor 1902. The memory 1903 may be a nonvolatile memory, for example, a hard disk drive (hard disk drive, HDD) or a solid-state drive (solid-state drive, SSD), or may be a volatile memory (volatile memory), for example, a random access memory (random-access memory, RAM). The memory 1903 is any other medium that can carry or store expected program code in a form of an instruction or a data structure and that can be accessed by a computer, but is not limited thereto.

The processor 1902 is configured to execute program code stored in the memory 1903, and is specifically configured to perform an action of the processing unit 1802. Details are not described in this application again.

In this implementation of this application, a specific connection medium between the communication interface 1901, the processor 1902 and the memory 1903 is not limited. In this implementation of this application, the memory 1903, the processor 1902, and the communication interface 1901 are connected by using a bus 1904 in FIG. 19, and the bus is represented by using a bold line in FIG. 19. A connection manner between other components is merely an example for description, and is not limited thereto. The bus may be classified into an address bus, a data bus, a control bus, or the like. For ease of representation, only one thick line is used to represent the bus in FIG. 19, but this does not mean that there is only one bus or only one type of bus.

A person skilled in the art should understand that the implementations of this application may be provided as a method, a system, or a computer program product. Therefore, this application may use a form of hardware only implementations, software only implementations, or implementations with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the implementations of this application. It should be understood that a computer program instruction may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instruction may be stored in a computer-readable memory that can indicate the computer or the another programmable data processing device to work in a specific manner, so that the instruction stored in the computer-readable memory generates an artifact that includes an instruction apparatus. The instruction apparatus implements the specific function in one or more processes in the flowcharts and/or in one or more blocks in the block diagrams.

The computer program instruction may be loaded onto the computer or the another programmable data processing device, so that a series of operations and steps are performed on the computer or the another programmable device, thereby generating computer-implemented processing. Therefore, the instruction executed on the computer or the another programmable device provides a step for implementing the specific function in one or more processes in the flowcharts and/or in one or more blocks in the block diagrams.

The scope of protection shall be defined by the appended claims.

## Claims

1. A communication method, wherein the communication method is performed by a network device, wherein the method comprises:

   determining (S1301) not to send, in a first time period, a physical downlink control channel, PDCCH, in at least one search space set included in a plurality of search space sets configured to be monitored by a terminal device; and
   sending (S1302) a first signal to the terminal device, wherein the first signal indicates to the terminal device not to monitor the at least one search space set in the first time period;
   wherein the first signal is one of a plurality of types of first signals, and different types of first signals indicate different search space sets;
   or wherein the method comprises:

   determining (S1301) not to send, in a first time period, at least one type of physical downlink control channel, PDCCH, included in multiple types of PDCCH configured to be monitored by a terminal device; and
   sending (S1302) a first signal to the terminal device, wherein the first signal indicates to the terminal device not to monitor the at least one type of PDCCH in the first time period;
   wherein the first signal is one of a plurality of types of first signals, and different types of first signals indicate different types of PDCCHs.

2. The method according to claim 1, wherein when the first signal indicates at least one search space set:

   the first signal is associated with an index of the at least one search space set;
   the first signal is associated with a control resource set, CORESET, in which the at least one search space set exists; or
   the first signal is associated with a type of the at least one search space set, and the type of the search space set is a common search space set or a UE-specific search space set.

**3.** The method according to claim 1, wherein when the first signal indicates at least one type of physical downlink control channel:

the at least one type of PDCCH is a PDCCH corresponding to at least one type of downlink control information, DCI, format; or
the at least one type of PDCCH is a PDCCH scrambled by using at least one type of radio network temporary identifier, RNTI.

**4.** The method according to any one of claims 1 to 3, wherein duration of the first time period is indicated by the first signal, or duration of the first time period is preconfigured.

**5.** The method according to any one of claims 1 to 4, wherein the first signal carries first information; the first information is used to indicate a location of the first time period in a second time period; and duration of the second time period is indicated by the first signal, or duration of the second time period is preconfigured.

**6.** A communication method, wherein the communication method is performed by a terminal device, wherein the method comprises:

receiving (S1302) a first signal sent by a network device, wherein the first signal indicates to the terminal device not to monitor at least one search space set in a first time period, wherein the at least one search space set is included in a plurality of search space sets configured to be monitored by the terminal device; and
determining (S1303), based on the first signal, not to monitor, in the first time period, a physical downlink control channel, PDCCH in the at least one search space set;
wherein the first signal is one of a plurality of types of first signals, and different types of first signals indicate different search space sets;
or wherein the method comprises:

receiving (S 1302) a first signal sent by a network device, wherein the first signal indicates to the terminal device not to monitor at least one type of physical downlink control channel, PDCCH, in a first time period, wherein the at least one type of PDCCH is included in multiple types of PDCCH configured to be monitored by the terminal device; and
determining (S1303), based on the first signal, not to monitor, in the first time period, the at least one type of PDCCH;
wherein the first signal is one of a plurality of types of first signals, and different types of first signals indicate different types of PDCCHs.

**7.** The method according to claim 6, wherein when the first signal indicates at least one search space set:

the first signal is associated with an index of the at least one search space set;
the first signal is associated with a control resource set, CORESET, in which the at least one search space set exists; or
the first signal is associated with a type of the at least one search space set, and the type of the search space set is a common search space set or a UE-specific search space set.

**8.** The method according to claim 6, wherein when the first signal indicates at least one type of PDCCH:

the at least one type of PDCCH is a PDCCH corresponding to at least one type of downlink control information, DCI, format; or
the at least one type of PDCCH is a PDCCH scrambled by using at least one type of radio network temporary identifier, RNTI.

**9.** The method according to any one of claims 6 to 8, wherein duration of the first time period is indicated by the first signal, or duration of the first time period is preconfigured.

**10.** The method according to any one of claims 6 to 8, wherein the first signal carries first information; the first information is used to indicate a location of the first time period in a second time period; and duration of the second time period is indicated by the first signal, or duration of the second time period is preconfigured.

15

**11.** A network device configured to perform the method according to any one of claims 1 to 5.

**12.** A terminal device configured to perform the method according to any one of claims 6 to 10.

**13.** A computer-readable storage medium comprising:

a set of instructions, which when executed by a network device, cause the network device to carry out the method according to any one of claims 1 to 5; or
a set of instructions, which when executed by a terminal device, cause the terminal device to carry out the method according to any one of claims 6 to 10.


**Patentansprüche**

**1.** Kommunikationsverfahren, wobei das Kommunikationsverfahren durch eine Netzwerkvorrichtung durchgeführt wird, wobei das Verfahren Folgendes umfasst:

Bestimmen (S1301), einen physikalischen Abwärtsstreckensteuerkanal, PDCCH, in einer ersten Zeitspanne in mindestens einer Suchraummenge, die in einer Vielzahl von zum Überwachen durch eine Endgerätevorrichtung ausgelegten Suchraummengen enthalten ist, nicht zu senden; und
Senden (S1302) eines ersten Signals an die Endgerätevorrichtung, wobei das erste Signal der Endgerätevorrichtung angibt, den mindestens einen in der ersten Zeitspanne festgelegten Suchraum nicht zu überwachen; wobei das erste Signal eines aus einer Vielzahl von Typen von ersten Signalen ist und verschiedene Typen von ersten Signalen verschiedene Suchraummengen angeben;
oder wobei das Verfahren Folgendes umfasst:

Bestimmen (S1301), in einer ersten Zeitspanne mindestens einen Typ von physikalischem Abwärtsstreckensteuerkanal, PDCCH, der in mehreren Typen von PDCCH enthalten ist, die zur Überwachung durch eine Endgerätevorrichtung ausgelegt sind, nicht zu senden; und
Senden (S1302) eines ersten Signals an die Endgerätevorrichtung, wobei das erste Signal der Endgerätevorrichtung angibt, den mindestens einen Typ von PDCCH in der ersten Zeitspanne nicht zu überwachen; wobei das erste Signal eines aus einer Vielzahl von Typen von ersten Signalen ist und verschiedene Typen von ersten Signalen verschiedene Typen von PDCCHs angeben.

**2.** Verfahren gemäß Anspruch 1, wobei, wenn das erste Signal mindestens eine Suchraummenge angibt:

das erste Signal einem Index der mindestens einen Suchraummenge zugeordnet ist;
das erste Signal einer Steuerressourcenmenge, CORESET, zugeordnet ist, in der die mindestens eine Suchraummenge vorhanden ist; oder
das erste Signal einem Typ der mindestens einen Suchraummenge zugeordnet ist, und der Typ der Suchraummenge eine gemeinsame Suchraummenge oder eine UEspezifische Suchraummenge ist.

**3.** Verfahren gemäß Anspruch 1, wobei, wenn das erste Signal mindestens einen Typ von physikalischem Abwärtsstreckensteuerkanal angibt:

der mindestens eine Typ von PDCCH ein PDCCH ist, der mindestens einem Typ von Abwärtsstreckensteuerinformations-, DCI-, Format entspricht; oder
der mindestens eine Typ von PDCCH ein PDCCH ist, der durch Verwendung mindestens eines Typs von temporärem Funknetzidentifikator, RNTI, verschlüsselt wird.

**4.** Verfahren gemäß einem der Ansprüche 1 bis 3, wobei die Dauer der ersten Zeitspanne durch das erste Signal angegeben wird, oder die Dauer der ersten Zeitspanne vorkonfiguriert ist.

**5.** Verfahren gemäß einem der Ansprüche 1 bis 4, wobei das erste Signal erste Informationen enthält; die ersten Informationen dazu verwendet werden, einen Ort der ersten Zeitspanne in einer zweiten Zeitspanne anzugeben; und die Dauer der zweiten Zeitspanne durch das erste Signal angegeben wird, oder die Dauer der zweiten Zeitspanne vorkonfiguriert ist.

**6.** Kommunikationsverfahren, wobei das Kommunikationsverfahren durch eine Endgerätevorrichtung durchgeführt wird, wobei das Verfahren Folgendes umfasst:

Empfangen (S1302) eines ersten Signals, das durch eine Netzwerkvorrichtung gesendet wird, wobei das erste Signal der Endgerätevorrichtung angibt, mindestens eine Suchraummenge in einer ersten Zeitspanne nicht zu überwachen, wobei die mindestens eine Suchraummenge in einer Vielzahl von Suchraummengen enthalten ist, die dazu ausgelegt sind, durch die Endgerätevorrichtung überwacht zu werden; und Bestimmen (S1303) basierend auf dem ersten Signal, in der ersten Zeitspanne einen physikalischen Abwärtsstreckensteuerkanal, PDCCH, in der mindestens einen Suchraummenge nicht zu überwachen;

wobei das erste Signal eines aus einer Vielzahl von Typen von ersten Signalen ist und verschiedene Typen von ersten Signalen verschiedene Suchraummengen angeben;
oder wobei das Verfahren Folgendes umfasst:

Empfangen (S1302) eines ersten Signals, das durch eine Netzwerkvorrichtung gesendet wird, wobei das erste Signal der Empfangsvorrichtung angibt, mindestens einen Typ von physikalischem Abwärtsstreckensteuerkanal, PDCCH, in einer ersten Zeitspanne nicht zu überwachen, wobei der mindestens eine Typ von PDCCH in mehreren Typen von PDCCH enthalten ist, die dazu ausgelegt sind, durch die Empfangsvorrichtung überwacht zu werden; und

Bestimmen (S1303) basierend auf dem ersten Signal, den mindestens einen Typ von PDCCH in der ersten Zeitspanne nicht zu überwachen;
wobei das erste Signal eines aus einer Vielzahl von Typen von ersten Signalen ist und verschiedene Typen von ersten Signalen verschiedene Typen von PDCCHs angeben.

**7.** Verfahren gemäß Anspruch 6, wobei, wenn das erste Signal mindestens eine Suchraummenge angibt:

das erste Signal einem Index der mindestens einen Suchraummenge zugeordnet ist;
das erste Signal einer Steuerressourcenmenge, CORESET, zugeordnet ist, in der die mindestens eine Suchraummenge vorhanden ist; oder
das erste Signal einem Typ der mindestens einen Suchraummenge zugeordnet ist, und der Typ der Suchraummenge eine gemeinsame Suchraummenge oder eine UEspezifische Suchraummenge ist.

**8.** Verfahren gemäß Anspruch 6, wobei, wenn das erste Signal mindestens einen Typ von PDCCH angibt:

der mindestens eine Typ von PDCCH ein PDCCH ist, der mindestens einem Typ von Abwärtsstreckensteuerinformations-, DCI-, Format entspricht; oder
der mindestens eine Typ von PDCCH ein PDCCH ist, der durch Verwendung mindestens eines Typs von temporärem Funknetzidentifikator, RNTI, verschlüsselt wird.

**9.** Verfahren gemäß einem der Ansprüche 6 bis 8, wobei die Dauer der ersten Zeitspanne durch das erste Signal angegeben wird, oder die Dauer der ersten Zeitspanne vorkonfiguriert ist.

**10.** Verfahren gemäß einem der Ansprüche 6 bis 8, wobei das erste Signal erste Informationen enthält; die ersten Informationen dazu verwendet werden, einen Ort der ersten Zeitspanne in einer zweiten Zeitspanne anzugeben; und die Dauer der zweiten Zeitspanne durch das erste Signal angegeben wird, oder die Dauer der zweiten Zeitspanne vorkonfiguriert ist.

**11.** Netzwerkvorrichtung, die dazu konfiguriert ist, das Verfahren gemäß einem der Ansprüche 1 bis 5 durchzuführen.

**12.** Endgerätevorrichtung, die dazu konfiguriert ist, das Verfahren gemäß einem der Ansprüche 6 bis 10 durchzuführen.

**13.** Computerlesbares Speichermedium, umfassend:

eine Menge von Anweisungen, die beim Ausführen durch eine Netzwerkvorrichtung die Netzwerkvorrichtung veranlassen, das Verfahren gemäß einem der Ansprüche 1 bis 5 durchzuführen; oder
eine Menge von Anweisungen, die beim Ausführen durch eine Endgerätevorrichtung die Endgerätevorrichtung veranlassen, das Verfahren gemäß einem der Ansprüche 6 bis 10 durchzuführen.

**Revendications**

1. Procédé de communication, le procédé de communication étant exécuté par un dispositif de réseau, le procédé comprenant :

   la détermination (S1301) de ne pas envoyer, dans une première période temporelle, un canal physique de commande de liaison descendante, PDCCH, dans au moins un ensemble d'espaces de recherche compris dans une pluralité d'ensembles d'espaces de recherche configurés pour être surveillés par un dispositif terminal ; et

   l'envoi (S1302) d'un premier signal au dispositif terminal, dans lequel le premier signal indique au dispositif terminal de ne pas surveiller l'au moins un ensemble d'espaces de recherche dans la première période temporelle ;
   dans lequel le premier signal est un signal d'une pluralité de types de premiers signaux, et différents types de premiers signaux indiquent différents ensembles d'espaces de recherche ;
   ou dans lequel le procédé comprend :

   la détermination (S1301) de ne pas envoyer, dans une première période temporelle, au moins un type de canal physique de commande de liaison descendante, PDCCH, compris dans de multiples types de PDCCH configurés pour être surveillés par un dispositif terminal ; et

   l'envoi (S1302) d'un premier signal au dispositif terminal, dans lequel le premier signal indique au dispositif terminal de ne pas surveiller l'au moins un type de PDCCH dans la première période temporelle ;
   dans lequel le premier signal est un signal d'une pluralité de types de premiers signaux, et différents types de premiers signaux indiquent différents types de PDCCH.

2. Procédé selon la revendication 1, dans lequel lorsque le premier signal indique au moins un ensemble d'espaces de recherche :

   le premier signal est associé à un indice de l'au moins un ensemble d'espaces de recherche ;
   le premier signal est associé à un ensemble de ressources de commande, CORESET, dans lequel existe l'au moins un ensemble d'espaces de recherche ; ou
   le premier signal est associé à un type de l'au moins un ensemble d'espaces de recherche, et le type de l'ensemble d'espaces de recherche est un ensemble d'espaces de recherche commun ou un ensemble d'espaces de recherche spécifique à l'équipement utilisateur.

3. Procédé selon la revendication 1, dans lequel lorsque le premier signal indique au moins un type de canal physique de commande de liaison descendante :

   l'au moins un type de PDCCH est un PDCCH correspondant à au moins un type de format d'informations de commande de liaison descendante, DCI ; ou
   l'au moins un type de PDCCH est un PDCCH brouillé au moyen d'au moins un type d'identifiant temporaire de réseau radio, RNTI.

4. Procédé selon l'une quelconque des revendications 1 à 3, dans lequel la durée de la première période temporelle est indiquée par le premier signal, ou la durée de la première période temporelle est préconfigurée.

5. Procédé selon l'une quelconque des revendications 1 à 4, dans lequel le premier signal porte des premières informations ; les premières informations sont utilisées pour indiquer un emplacement de la première période temporelle dans une seconde période temporelle ; et la durée de la seconde période temporelle est indiquée par le premier signal, ou la durée de la seconde période temporelle est préconfigurée.

6. Procédé de communication, le procédé de communication étant exécuté par un dispositif terminal, le procédé comprenant :

   la réception (S1302) d'un premier signal envoyé par un dispositif de réseau, dans lequel le premier signal indique au dispositif terminal de ne pas surveiller au moins un ensemble d'espaces de recherche dans une première période temporelle, dans lequel l'au moins un ensemble d'espaces de recherche est compris dans une pluralité d'ensembles d'espaces de recherche configurés pour être surveillés par le dispositif terminal ; et
   la détermination (S1303), sur la base du premier signal, de ne pas surveiller, dans la première période temporelle, un canal physique de commande de liaison descendante, PDCCH, dans l'au moins un ensemble d'espaces de recherche ;

dans lequel le premier signal est un signal d'une pluralité de types de premiers signaux, et différents types de premiers signaux indiquent différents ensembles d'espaces de recherche ;

ou dans lequel le procédé comprend :

la réception (S1302) d'un premier signal envoyé par un dispositif de réseau, dans lequel le premier signal indique au dispositif terminal de ne pas surveiller au moins un type de canal physique de commande de liaison descendante, PDCCH, dans une première période temporelle, dans lequel l'au moins un type de PDCCH est compris dans de multiples types de PDCCH configurés pour être surveillés par le dispositif terminal ; et

la détermination (S1303), sur la base du premier signal, de ne pas surveiller, dans la première période temporelle, l'au moins un type de PDCCH ;

dans lequel le premier signal est un signal d'une pluralité de types de premiers signaux, et différents types de premiers signaux indiquent différents types de PDCCH.

7. Procédé selon la revendication 6, dans lequel lorsque le premier signal indique au moins un ensemble d'espaces de recherche :

le premier signal est associé à un indice de l'au moins un ensemble d'espaces de recherche ;

le premier signal est associé à un ensemble de ressources de commande, CORESET, dans lequel existe l'au moins un ensemble d'espaces de recherche ; ou

le premier signal est associé à un type de l'au moins un ensemble d'espaces de recherche, et le type de l'ensemble d'espaces de recherche est un ensemble d'espaces de recherche commun ou un ensemble d'espaces de recherche spécifique à l'équipement utilisateur.

8. Procédé selon la revendication 6, dans lequel lorsque le premier signal indique au moins un type de PDCCH :

l'au moins un type de PDCCH est un PDCCH correspondant à au moins un type de format d'informations de commande de liaison descendante, DCI ; ou

l'au moins un type de PDCCH est un PDCCH brouillé au moyen d'au moins un type d'identifiant temporaire de réseau radio, RNTI.

9. Procédé selon l'une quelconque des revendications 6 à 8, dans lequel la durée de la première période temporelle est indiquée par le premier signal, ou la durée de la première période temporelle est préconfigurée.

10. Procédé selon l'une quelconque des revendications 6 à 8, dans lequel le premier signal porte des premières informations ; les premières informations sont utilisées pour indiquer un emplacement de la première période temporelle dans une seconde période temporelle ; et la durée de la seconde période temporelle est indiquée par le premier signal, ou la durée de la seconde période temporelle est préconfigurée.

11. Dispositif de réseau configuré pour exécuter le procédé selon l'une quelconque des revendications 1 à 5.

12. Dispositif terminal configuré pour exécuter le procédé selon l'une quelconque des revendications 6 à10.

13. Support d'enregistrement lisible par ordinateur comprenant :

un ensemble d'instructions qui, lorsqu'elles sont exécutées par un dispositif de réseau, amènent le dispositif de réseau à mettre en oeuvre le procédé selon l'une quelconque des revendications 1 5 ; ou

un ensemble d'instructions qui, lorsqu'elles sont exécutées par un dispositif terminal, amènent le dispositif terminal à mettre en oeuvre le procédé selon l'une quelconque des revendications 6 à 10.

FIG. 1

Downlink time-frequency resource

Resource block (RB) 12 subcarriers

OFDM symbol

Resource element (RE)

Subcarrier

FIG. 2

CCEs in a CORESET:

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | ... |

FIG. 3

PDCCH demodulation reference signal

Frequency domain

REG

| 0 | 1 | 2 | 3 | 4 | 5 | 6 | 7 | 8 | 9 | 10 | 11 |

FIG. 4

FIG. 5

CCE set of PDCCH candidates at an aggregation level AL=2

0  1  2  3  4  5  6  7  8  9  10 11 12 13 14 15 16 17 18 19 20 21 22 23  ...

PDCCH candidate

FIG. 6

Detection cycle                    Detection cycle

Slot offset  Quantity of slots

Slot index   0  1  2  3  4  5  6  7  8  9  10  0  1  2  3  4  5  6  7  8  9  10

Time domain

Slot

FIG. 7

On duration (on duration)

A terminal device monitors a PDCCH

DRX cycle                    Time

FIG. 8

Active time

Running time of an
on duration timer

Running time of
an inactivity timer

The inactivity
timer expires

DRX cycle

Time

A terminal device
detects a PDCCH

The terminal device
detects a PDCCH, and
resets an inactivity timer

FIG. 9

The terminal device
detects a PDCCH,
and resets the
inactivity timer

The terminal
device
monitors a
PDCCH

The terminal device
monitors a PDCCH

On duration
(on duration)

On duration
(on duration)

Running time of an
inactivity timer

A terminal device
monitors a PDCCH

Sleep state

FIG. 10

The terminal device detects a PDCCH, and resets the inactivity timer

The terminal device detects a GTS

Sleep state

A terminal device monitors a PDCCH

Sleep time

On duration (on duration)

The terminal device enters the sleep state for a period of time based on a GTS detection result

On duration (on duration)

Running time of an inactivity timer

FIG. 11

FIG. 12

```
┌──────────────────┐                              ┌──────────────────┐
│  Network device  │                              │  Terminal device │
└────────┬─────────┘                              └─────────┬────────┘
         │                                                  │
┌────────┴─────────┐                                        │
│ S1301. Determine not to│                                  │
│ send a physical downlink│                                 │
│ control channel on at least│                              │
│ one search space set in a│                                │
│ first time period; or│                                    │
│ determine not to send at│                                 │
│ least one type of physical│                               │
│ downlink control channel│                                 │
│ in a first time period│                                   │
└────────┬─────────┘                                        │
         │        S1302. Send a first signal               │
         │ ───────────────────────────────────────────────>│
         │                                         ┌────────┴────────┐
         │                                         │ S1303. Determine, based on│
         │                                         │ the first signal, not to│
         │                                         │ monitor the physical│
         │                                         │ downlink control channel on│
         │                                         │ the at least one search space│
         │                                         │ set in the first time period; or│
         │                                         │ determine, based on the first│
         │                                         │ signal, not to monitor the at│
         │                                         │ least one type of physical│
         │                                         │ downlink control channel in│
         │                                         │ the first time period│
         │                                         └────────┬────────┘
         │                                                  │
```

FIG. 13

| First signal 0 |
| Search space set 1 |
| Search space set 3 |

| First signal 1 |
| Search space set 2 |

FIG. 14

UE detects the first signal 0

First time period of a first signal

0 1 2 3 4 5 6 7 8 9 10 11 12 13 14 15 16 17

UE does not detect the first signal 0

0 1 2 3 4 5 6 7 8 9 10 11 14 15 16 17

UE detects the first signal 1

15 16

UE does not detect the first signal 1

15 16

Search space set 1

Search space set 2

Search space set 3

Slot in which detection does not need to be performed on a corresponding search space set

Moment of a first signal 0

Moment of a first signal 1

FIG. 15

Second time period of a first signal

UE detects a first signal

Slot corresponding to the first bit

Slot corresponding to the second bit

| 0 | 1 | 2 | 3 | 4 | 5 | 6 | 7 | 8 | 9 | 10 | 11 | 12 | 13 | 14 | 15 | 16 | 17 |

Search space set 1

Search space set 3

Slot in which detection does not need to be performed on a corresponding search space set

FIG. 16

Search
space set 1

Search
space set 2

CORESET

Frequency
domain

Time
domain

Search space set that UE
does not need to monitor

FIG. 17

Communication apparatus

1801

Transceiver unit

1802

Processing unit

FIG. 18

Communication apparatus

1901

Communication interface

1902

Processor

1904

1903

Memory

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108632960 A